# EUROPEAN PATENT APPLICATION

(11) **EP 4 799 976 A1**
(43) Date of publication of application: **02.09.2026**
(21) Application number: 23956769.6
(22) Date of filing: 25.10.2023
(51) Int. Cl.: C01B 17/38, C01B 17/40

(54) **METHOD FOR PRODUCING ANHYDROUS SODIUM SULFIDE PHYSICAL OBJECT OR ANHYDROUS SODIUM POLYSULFIDE PHYSICAL OBJECT**

(71) Applicant: Nagao & Co., Ltd., Okayama-shi, Okayama 700-0831 (JP)
(72) Inventor: TANAKA, Hiroaki, Okayama-shi, Okayama 700-0831 (JP); YAMAGUCHI, Kentaro, Okayama-shi, Okayama 700-0831 (JP)
(74) Representative: Hasegawa, Kan
(86) International application number: PCT/JP2023/038465
(87) International publication number: WO 2025/088714

(57) **Abstract**

The present invention provides a method for producing an anhydrous sodium sulfide in solid form or an anhydrous sodium polysulfide in solid form, comprising repeating following steps in this order to continuously give the anhydrous sodium sulfide in solid form or the anhydrous sodium polysulfide in solid form;
a thin-film forming step of feeding an aqueous sodium sulfide solution or an aqueous sodium polysulfide solution as a starting material to a disc surface to form a thin-filmed aqueous sodium sulfide solution or aqueous sodium polysulfide solution;
a drying step of dehydrating the thin-filmed aqueous sodium sulfide solution or aqueous sodium polysulfide solution on the disc surface under a reduced pressure and an inert gas atmosphere; and
a separation step of taking out the anhydrous sodium sulfide in solid form or the anhydrous sodium polysulfide in solid form obtained in the drying step from the disc surface.

Thus, there is provided a production method which allows for continuously producing an anhydrous sodium sulfide in solid form or an anhydrous sodium polysulfide in solid form safely and with a high production efficiency.

## Description

### Technical Field

The present invention relates to a method for continuously producing an anhydrous sodium sulfide in solid form or an anhydrous sodium polysulfide in solid form containing a less amount of impurities.

### Background Art

Sodium sulfide (Na₂S) is known as a raw material for organic synthesis and a polyphenylene sulfide (PPS) resin. Furthermore, sodium polysulfide (Na₂Sₓ) wherein x is a real number greater than 1 and 4 or less is also known as a raw material for rubber chemicals and silane coupling agents. Commercially available sodium sulfides in solid form typically contain a certain amount of water. Furthermore, sodium polysulfide is sold as an aqueous solution. This may lead to undesirable side reactions and/or reverse reactions. Moisture must be, therefore, removed before using as a raw material. Known methods for removing moisture include dehydrating flakes, chips, or pellets of a sodium sulfide in solid form by heating under reduced pressure; dehydrating a sodium sulfide in solid form in an inert gas atmosphere; or a combination of both. Furthermore, it is known that anhydrous sodium polysulfide can be synthesized by a direct reaction of metallic sodium with sulfur.

For example, Patent Literature 1 describes a method for dehydrating sodium sulfide in solid form, such as sodium sulfide pentahydrate, wherein anhydrous sodium sulfide is added to the sodium sulfide pentahydrate and the like, and then the mixture is dehydrated by heating under reduced pressure. Furthermore, Patent Literature 2 describes a method for producing anhydrous sodium polysulfide, comprising directly reacting metallic sodium with sulfur.

### Citation List

### Patent Literature

Patent Literature 1: JP 4-310508 A
Patent Literature 2: JP 2001-31406 A

### Summary of Invention

### Technical Problem

However, the dehydration method described in Patent Literature 1 is a batch process, in which a dehydration time may be long, resulting in poor production efficiency and high cost. Another method for removing moisture from sodium sulfide involves dehydration by passing an inert gas through the sodium sulfide in solid form, but this method also requires a long dehydration time and is thus not considered to be efficient in production. The method for producing an anhydrous sodium polysulfide in solid form described in Patent Literature 2 is dangerous because it uses metallic sodium. Furthermore, there is no mention of the technical idea of the method for producing an anhydrous sodium sulfide in solid form or an anhydrous sodium polysulfide in solid form using an inexpensive aqueous sodium sulfide or sodium polysulfide solution as a starting material.

To solve the above problems, an objective of the present invention is to provide a method for producing an anhydrous sodium sulfide in solid form or an anhydrous sodium polysulfide in solid form safely and efficiently, which allows for continuously producing an anhydrous sodium sulfide in solid form or an anhydrous sodium polysulfide in solid form.

### Solution to Problem

The above problems can be solved by providing a method for producing an anhydrous sodium sulfide in solid form or an anhydrous sodium polysulfide in solid form, comprising repeating following steps in this order to continuously give the anhydrous sodium sulfide in solid form or the anhydrous sodium polysulfide in solid form;
a thin-film forming step of feeding an aqueous sodium sulfide solution or an aqueous sodium polysulfide solution as a starting material to a disc surface to form a thin-filmed aqueous sodium sulfide solution or aqueous sodium polysulfide solution;
a drying step of dehydrating the thin-filmed aqueous sodium sulfide solution or aqueous sodium polysulfide solution on the disc surface under a reduced pressure and an inert gas atmosphere; and
a separation step of taking out the anhydrous sodium sulfide in solid form or the anhydrous sodium polysulfide in solid form obtained in the drying step from the disc surface.

Here, it is preferable that a dehydration time in the drying step is 6 to 300 seconds, and a concentration of the aqueous sodium sulfide solution or the aqueous sodium polysulfide solution is 3 to 60% by weight. It is also preferable that a content of the anhydrous sodium sulfide component in the anhydrous sodium sulfide in solid form is 95% by weight or more, and that a content of the anhydrous sodium polysulfide component in the anhydrous sodium polysulfide in solid form is 90% by weight or more. It is also preferable that a moisture content in the anhydrous sodium sulfide in solid form or the anhydrous sodium polysulfide in solid form is 3% by weight or less.

### Advantageous Effects of Invention

The present invention can provide a method for producing an anhydrous sodium sulfide in solid form or an anhydrous sodium polysulfide in solid form safely and efficiently, which allows for continuously producing an anhydrous sodium sulfide in solid form or an anhydrous sodium polysulfide in solid form.

### Brief Description of Drawings

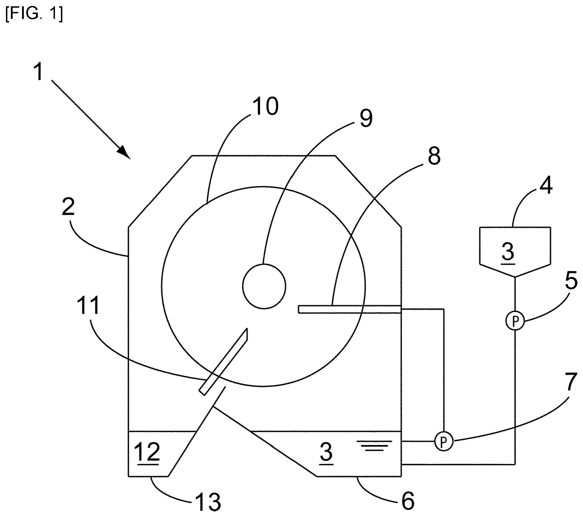

FIG. 1 is a schematic view showing an example of a vacuum thin-film dryer used in Examples 1 and 2.

### Description of Embodiments

The present invention will be specifically described with reference to the drawings. FIG. 1 is a schematic view showing an example of a vacuum thin-film dryer used in the present invention, which comprises, inside a container, a supply tank for supplying an aqueous sodium sulfide solution or an aqueous sodium polysulfide solution; a supply pump; a circulation tank; a circulation pump; and a supply nozzle. The vacuum thin-film dryer is also equipped with a disc having a rotating shaft; a scraper for taking out the anhydrous sodium sulfide in solid form or the anhydrous sodium polysulfide in solid form from the disc surface; and a collection tank for collecting the anhydrous sodium sulfide in solid form or anhydrous sodium polysulfide in solid form, and although being unshown in FIG. 1, a disc heating means, an inert gas supply means, and a depressurizing means.

A method for producing an anhydrous sodium sulfide in solid form or an anhydrous sodium polysulfide in solid form of the present invention comprises repeating following steps in this order to continuously give the anhydrous sodium sulfide in solid form or the anhydrous sodium polysulfide in solid form;
a thin-film forming step of feeding an aqueous sodium sulfide solution or an aqueous sodium polysulfide solution as a starting material to a disc surface to form a thin-filmed aqueous sodium sulfide solution or aqueous sodium polysulfide solution (hereinafter, sometimes abbreviated as a "thin-film forming step");
a drying step of dehydrating the thin-filmed aqueous sodium sulfide solution or aqueous sodium polysulfide solution on the disc surface under a reduced pressure and an inert gas atmosphere (hereinafter, sometimes abbreviated as a "drying step"); and
a separation step of taking out the anhydrous sodium sulfide in solid form or the anhydrous sodium polysulfide in solid form obtained in the drying step from the disc surface (hereinafter, sometimes abbreviated as a "separation step"). Herein, an anhydrous sodium sulfide in solid form refers to a solid state anhydrous sodium sulfide (Na₂S). An anhydrous sodium polysulfide in solid form refers to a solid state anhydrous sodium polysulfide (Na₂Sₓ), wherein x is a real number more than 1 and 4 or less. Examples of sodium polysulfide include sodium disulfide (Na₂S₂), sodium trisulfide (Na₂S₃), and sodium tetrasulfide (Na₂S₄).

As can be seen from a comparison between Example 1 and Comparative Example 1 described later, in Comparative Example 1, in which the aqueous sodium sulfide solution was sprayed as a mist for dehydration, viscosity sharply rose and the solution sprayed out as a liquid. Its black color suggested that the hot and highly alkaline aqueous sodium sulfide solution corroded the piping. Corrosion could reduce the pipe wall thickness, potentially leading to the solution spraying out, which may pose a safety issue. In contrast, in Example 1, in which the thin-film forming, the drying, and the separation steps were repeated in this order, an anhydrous sodium sulfide in solid form with few impurities could be continuously, safely, and efficiently obtained. Similarly, in Example 2, in which the thin-film forming, the drying, and the separation steps were repeated in this order, an anhydrous sodium polysulfide in solid form with few impurities could be continuously, safely, and efficiently obtained. Therefore, it can be understood that the present invention employing such a method is quite significant.

The thin-film forming step of the present invention involves the process of feeding an aqueous sodium sulfide solution or an aqueous sodium polysulfide solution to the disc surface to form a thin-filmed aqueous sodium sulfide solution or aqueous sodium polysulfide solution. As shown in FIG. 1, the aqueous sodium sulfide solution or the aqueous sodium polysulfide solution is preferably fed from a supply tank to a circulation tank by a supply pump, and from the circulation tank to a supply nozzle by a circulation pump. Then, the aqueous sodium sulfide solution or the aqueous sodium polysulfide solution is fed from the supply nozzle to the rotating disc surface to suitably form a thin-filmed aqueous sodium sulfide solution or aqueous sodium polysulfide solution. Suitably, the excess aqueous sodium sulfide solution or the aqueous sodium polysulfide solution that has not adhered to the disc surface is recovered in the circulation tank and then returned to the supply nozzle by a circulation pump. During this process, the disc surface is preferably maintained at 50 to 170°C, more preferably 80 to 150°C, by a disc heating means. There are no particular restrictions to the disc heating means, and a separate heating device can be provided, or alternatively vapor removed in the drying step described below can be used as a heating means. As with the drying step described below, the thin-film forming step also preferably employs a method in which the inside of the container is kept under reduced pressure and an inert atmosphere.

A concentration of the aqueous sodium sulfide solution or the aqueous sodium polysulfide solution used in the present invention is preferably, but not limited to, 3 to 60% by weight. When a concentration of the aqueous sodium sulfide solution or the aqueous sodium polysulfide solution is less than 3% by weight, production efficiency may be significantly reduced; therefore, the concentration is more preferably 5% by weight or more, even more preferably 8% by weight or more. Meanwhile, if the concentration of the aqueous sodium sulfide solution or the aqueous sodium polysulfide solution exceeds 60% by weight, the solution may solidify in the piping during solution feeding; therefore, the concentration is more preferably 55% by weight or less, even more preferably 50% by weight or less.

In the drying step of the present invention, the thin-filmed aqueous sodium sulfide solution or aqueous sodium polysulfide solution is dehydrated on the disc surface under a reduced pressure and an inert gas atmosphere. As the disc rotates, moisture is removed from the thin-filmed aqueous sodium sulfide solution or aqueous sodium polysulfide solution on the disc surface. During the process, as in the thin-film forming step, the disc surface is maintained preferably 50 to 170, more preferably 80 to 150°C by a disc heating means. There are no particular restrictions to a depressurization method in the drying step, and suitably the inside of a container is depressurized by a depressurizing means such as a vacuum pump, whereby the moisture is uniformly and efficiently vaporized and removed as vapor. In the light of removing vapor in the container, a preferable embodiment is that an outlet for removing vapor is provided at any position of the container.

There are no particular restrictions to a method for creating an inert gas atmosphere in the drying step, and suitably an inert gas is fed into the container using an inert gas supply means. Examples of inert gases include nitrogen, helium, and argon, and among these, nitrogen is preferable. It is also preferable that a recovery means for recovering the inert gas supplied into the container is provided. There are no particular restrictions to the recovery means, and a preferable embodiment can be that the inert gas is recovered together with vapor from the aforementioned outlet for removing vapor, and that the recovered inert gas is separated from the vapor and then the inert gas is resupplied into the container using the inert gas supply means.

Based on the inventors' investigations, in order to achieve efficient production, the dehydration time is preferably 6 to 300 seconds, more preferably 10 to 240 seconds, and even more preferably 20 to 180 seconds. In the present invention, the dehydration time refers to a time required for the drying step, and refers to a time from immediately after the thin-filmed aqueous sodium sulfide solution or aqueous sodium polysulfide solution is obtained in the thin-film forming step to immediately before taking out the anhydrous sodium sulfide in solid form or the anhydrous sodium polysulfide in solid form from the disc surface in the separation step.

A degree of vacuum (absolute pressure) inside the container during the drying step is preferably 1 to 40 kPa, and more preferably 5 to 30 kPa. By controlling the degree of vacuum and a temperature of the disc surface, moisture can be efficiently removed from the thin-filmed aqueous sodium sulfide solution or aqueous sodium polysulfide solution on the disc surface, to give anhydrous sodium sulfide in solid form or anhydrous sodium polysulfide in solid form.

Then, the separation step of the present invention involves taking out the anhydrous sodium sulfide in solid form or the anhydrous sodium polysulfide in solid form obtained in the drying step from the disc surface. While there are no particular restrictions to a taking-out method, it is preferable that, as shown in FIG. 1, the container has a scraper, and the anhydrous sodium sulfide in solid form or the anhydrous sodium polysulfide in solid form obtained in the drying step is scraped off from the disc surface with the scraper while the disc is rotated, and there is a collection tank for collecting the scraped anhydrous sodium sulfide in solid form or anhydrous sodium polysulfide in solid form. Because the anhydrous sodium sulfide in solid form or the anhydrous sodium polysulfide in solid form exhibits deliquescent properties, in the separation step, the container is preferably kept under reduced pressure and an inert atmosphere as in the drying step.

The method for producing the anhydrous sodium sulfide in solid form or the anhydrous sodium polysulfide in solid form of the present invention is characterized by repeating the above-mentioned thin-film forming step, the drying step, and the separation step in this order, thereby enabling continuous, safe, and efficient production of the anhydrous sodium sulfide in solid form or the anhydrous sodium polysulfide in solid form. In the anhydrous sodium sulfide in solid form obtained by the present invention, a content of the anhydrous sodium sulfide component is preferably 95% by weight or more, more preferably 97% by weight or more, and even more preferably 98% by weight or more. In the anhydrous sodium polysulfide in solid form, a content of the anhydrous sodium polysulfide component is preferably 90% by weight or more, more preferably 91% by weight or more, and even more preferably 92% by weight or more. Here, a content of the anhydrous sodium sulfide component and the anhydrous sodium polysulfide component is generally 99.5% by weight or less, and preferably 99% by weight or less.

In the anhydrous sodium sulfide in solid form or the anhydrous sodium polysulfide in solid form obtained in the present invention, a moisture content is preferably 3% by weight or less, more preferably 2% by weight or less, even more preferably 1% by weight or less, particularly preferably 0.5% by weight or less and most preferably, moisture is substantially absent. The moisture content is generally 0.01% by weight or more.

The anhydrous sodium sulfide in solid form obtained in the present invention may contain impurities such as sodium hydrosulfide (NaSH), sodium carbonate (Na₂CO₃), sodium sulfite (Na₂SO₃), and sodium thiosulfate (Na₂S₂O₃). Here, the total content of sodium hydrosulfide (NaSH), sodium carbonate (Na₂CO₃) , sodium sulfite (Na₂SO₃), and sodium thiosulfate (Na₂S₂O₃) components is preferably 5% by weight or less, more preferably 4% by weight or less, even more preferably 3% by weight or less, and particularly preferably 2% by weight or less. The total content is generally 0.5% by weight or more.

Among these, a content of sodium hydrosulfide (NaSH) component in the anhydrous sodium sulfide in solid form obtained by the present invention is preferably 1.0% by weight or less. In the light of minimizing impurities, a content of sodium hydrosulfide (NaSH) component is more preferably 0.8% by weight or less, further preferably 0.5% by weight or less. A content of sodium hydrosulfide component is generally 0.1% by weight or more.

The anhydrous sodium polysulfide in solid form obtained by the present invention may contain impurities such as sodium thiosulfate (Na₂S₂O₃), whose content is preferably 10% by weight or less, more preferably 8% by weight or less, further preferably 6% by weight or less, particularly preferably 5% by weight or less. The above content is generally 0.1% by weight or more.

The anhydrous sodium sulfide in solid form or the anhydrous sodium polysulfide in solid form obtained in the present invention can be in any shape without any restriction, such as flakes, chips and pellets. Because the anhydrous sodium sulfide in solid form or the anhydrous sodium polysulfide in solid form obtained by the present invention has a low moisture content, it can be suitably used as a raw material for organic synthesis or industrial products that are sensitive to moisture.

### Examples

The present invention will be more detailed with reference to Examples.

### Example 1

Two liters of a 10% by weight aqueous sodium sulfide solution was fed to a circulation tank from a supply tank of a vacuum thin-film dryer (from Nishimura Iron Works Co., Ltd.) by a supply pump. The 10% by weight aqueous sodium sulfide solution was then pumped from the circulation tank to a supply nozzle by the circulation pump, and from the tip of the supply nozzle, the 10% by weight aqueous sodium sulfide solution was continuously fed to a rotating disc surface with a heat transfer area of 0.4 m², to form a thin film of the 10% by weight aqueous sodium sulfide solution on the disc surface. The excess aqueous sodium sulfide solution that did not adhere to the disc was returned to the circulation tank and was again pumped from the circulation tank to the supply nozzle. A degree of vacuum (absolute pressure) inside the dryer was 20 kPaabs; a disc steam pressure (gauge pressure) was 0.3 MPaG; a nitrogen flow rate was 50 L/min (99.9% or more), and a disc surface temperature was 140°C. As the disc rotated, moisture in the thin film was removed in 30 seconds, forming a solid. The solid was scraped off from the disc surface with a scraper and collected in a collection tank, yielding an anhydrous sodium sulfide in solid form. The components of the resulting anhydrous sodium sulfide in solid form were analyzed by a combination of neutralization titration and oxidation-reduction titration. A moisture value was calculated by subtracting the other components from the total. The results are summarized in Table 1.

### Example 2

Two liters of a 30% by weight aqueous sodium tetrasulfide solution was fed to a circulation tank from a supply tank of a vacuum thin-film dryer (from Nishimura Works Co., Ltd.) by a supply pump. The 30% by weight aqueous sodium tetrasulfide solution was then pumped from the circulation tank to a supply nozzle by the circulation pump, and from the tip of the supply nozzle, the 30% by weight aqueous sodium tetrasulfide solution was continuously fed to a rotating disc surface with a heat transfer area of 0.4 m², to form a thin film of the aqueous sodium tetrasulfide solution on the disc surface. The excess aqueous sodium tetrasulfide solution that did not adhere to the disc was returned to the circulation tank and was again pumped from the circulation tank to the supply nozzle. A degree of vacuum (absolute pressure) inside the dryer was 20 kPaabs; a disc vapor pressure (gauge pressure) was 0.3 MPaG; a nitrogen flow rate was 50 L/min (99.9% or more), and a disc surface temperature was 140°C. As the disc rotated, moisture in the thin film was removed in 30 seconds, forming a solid. The solid was scraped off from the disc surface with a scraper and collected in a collection tank, yielding an anhydrous sodium tetrasulfide in solid form as an anhydrous sodium polysulfide in solid form. The components of the resulting anhydrous sodium tetrasulfide in solid form were analyzed by a combination of colorimetry and oxidation-reduction titration. The results are summarized in Table 2.

### Comparative Example 1

A 15% by weight aqueous sodium sulfide solution was continuously fed to a heat exchange piping of a vacuum spray dryer at a rate of 7.2 L/h. During the process, the entire system was depressurized to 10 Torr. The heat exchange piping was heated to 150°C, and the sprayed 15% by weight aqueous sodium sulfide solution became a highly viscous liquid that adhered to the inside of a collection canister. A collection canister jacket was heated to 120°C for preventing moisture absorption and condensation. After cooling, the sodium sulfide solid adhering to the collection canister was recovered. The components of the resulting sodium sulfide solid were analyzed as described in Example 1. The results are shown in Table 1. The sodium sulfide liquid was a highly viscous, black liquid at the time of spraying, which is thought to have condensed in the heat exchange piping while corroding the piping. The collection canister also turned black. It is assumed that the highly alkaline aqueous sodium sulfide solution, which is heated to a high temperature due to piping corrosion, would spray out of the piping. This indicates problems in quality, durability, and safety.

### Comparative Example 2

Two hundred grams of sodium sulfide flakes were placed in a 500 mL rotary evaporator, followed by initiating introduction of nitrogen gas heated to 95°C into the bottom of the rotary evaporator at a rate of 10 normal liters per minute. After 9 minutes, the contents began to turn white, and after 60 minutes, the contents had turned almost entirely white, so the introduction of nitrogen gas was stopped. During the process, an internal temperature was 76°C. The rotary evaporator was then connected to a vacuum pump, and dehydration was conducted under a reduced pressure of 40 Torr and heating. Twenty minutes after the initiation of dehydration under reduced pressure and heating, some of the solid began to melt.

**[Table 1]**

| | Na₂S | NaSH | Na₂CO₃ | Na₂SO₃ | Na₂S₂O₃ | Moisture |
|---|---|---|---|---|---|---|
| Example 1 | 98.5 | 0.5 | 0.2 | 0.3 | 0.1 | 0.4 |
| Comparative Example 1 | 72.1 | 0.4 | 2.0 | 0.2 | 0.1 | 25.2 |

| | | | | | | |
|---|---|---|---|---|---|---|
| Unit: % by weight | | | | | | |

**[Table 2]**

| | Na₂S₄ | Na₂S₂O₃ | Moisture |
|---|---|---|---|
| Example 2 | 96.0 | 3.9 | 0.1 |

| | | | |
|---|---|---|---|
| Unit: % by weight | | | |

### Reference Signs List

1: Vacuum thin-film dryer
2: Container
3: Aqueous sodium sulfide solution or aqueous sodium polysulfide solution
4: Supply tank
5: Supply pump
6: Circulation tank
7: Circulation pump
8: Supply nozzle
9: Rotating shaft
10: Disc
11: Scraper
12: Anhydrous sodium sulfide in solid form or anhydrous sodium polysulfide in solid form
13: Collection tank

## Claims

1. A method for producing an anhydrous sodium sulfide in solid form or an anhydrous sodium polysulfide in solid form, comprising repeating following steps in this order to continuously give the anhydrous sodium sulfide in solid form or the anhydrous sodium polysulfide in solid form;
a thin-film forming step of feeding an aqueous sodium sulfide solution or an aqueous sodium polysulfide solution as a starting material to a disc surface to form a thin-filmed aqueous sodium sulfide solution or aqueous sodium polysulfide solution;
a drying step of dehydrating the thin-filmed aqueous sodium sulfide solution or aqueous sodium polysulfide solution on the disc surface under a reduced pressure and an inert gas atmosphere; and
a separation step of taking out the anhydrous sodium sulfide in solid form or the anhydrous sodium polysulfide in solid form obtained in the drying step from the disc surface.

2. The method for producing an anhydrous sodium sulfide in solid form or an anhydrous sodium polysulfide in solid form according to Claim 1, wherein a dehydration time in the drying step is 6 to 300 seconds.

3. The method for producing an anhydrous sodium sulfide in solid form or an anhydrous sodium polysulfide in solid form according to Claim 1 or 2, wherein a concentration of the aqueous sodium sulfide solution or the aqueous sodium polysulfide solution is 3 to 60% by weight.

4. The method for producing an anhydrous sodium sulfide in solid form according to any one of Claims 1 to 3, wherein a content of the anhydrous sodium sulfide component in the anhydrous sodium sulfide in solid form is 95% by weight or more.

5. The method for producing an anhydrous sodium polysulfide in solid form according to any one of Claims 1 to 3, wherein a content of the anhydrous sodium polysulfide component in the anhydrous sodium polysulfide in solid form is 90% by weight or more.

6. The method for producing an anhydrous sodium sulfide in solid form or an anhydrous sodium polysulfide in solid form according to any one of Claims 1 to 3, wherein a moisture content in the anhydrous sodium sulfide in solid form or the anhydrous sodium polysulfide in solid form is 3% by weight or less.
